# EUROPEAN PATENT APPLICATION

(11) **EP 4 517 975 A1**
(43) Date of publication of application: **05.03.2025**
(21) Application number: 23215504.4
(22) Date of filing: 11.12.2023
(51) Int. Cl.: H01M 50/244, H01M 50/262, H01M 50/271, H01M 50/284

(54) **HOUSING STRUCTURE OF A BATTERY PACK AND BATTERY PACK**

(30) Priority: 30.08.2023 CN 202322359220 U
(71) Applicant: Shanghai Baicheng Electric Equipment Manufacture Co. Ltd., Shanghai 201806 (CN)
(72) Inventor: ZHAO, Xianguo, Waigang Town, Jiading District, Shanghai, 201806 (CN); XIN, Chao, Waigang Town, Jiading District, Shanghai, 201806 (CN); ZHOU, Liangliang, Waigang Town, Jiading District, Shanghai, 201806 (CN)
(74) Representative: Wallinger Ricker Schlotter Tostmann

(57) **Abstract**

Provided are a housing structure and a battery pack. The housing structure of a battery pack includes an upper housing (10), a lower housing (20), a support base (30), and a release member (40). The upper housing (10) is formed with a terminal connection port (11), a first open slot (12), and a second open slot (13). The lower housing (20) is sealed with the upper housing (10) so that a chamber is formed between the upper housing (10) and the lower housing (20). The support base (30) is formed with a guide groove (31). The support base (30) is fixed to and sealed with the upper housing (10). The support base (30) divides the chamber into an opened chamber (21) and a sealed chamber (22). The release member (40) is slidably connected to the support base (30) along the guide groove (31).

## Description

### TECHNICAL FIELD

The present disclosure relates to the field of battery pack structure technology and, in particular, to a housing structure of a battery pack and a battery pack.

### BACKGROUND

Commonly, to enhance the connection tightness between a battery pack and an electric workpiece, the battery pack is usually provided with a release member. The release member includes a pressing portion and an execution portion. The pressing portion and the execution portion are slidably connected to the housing of the battery pack. The execution portion is in a barbed shape and configured to be connected to a corresponding connection structure of the electric workpiece. The pressing portion is configured to control the execution portion to extend from the housing or retract into the housing.

Due to the disposition of the release member, the gap between the housing of the battery pack and the release member is difficult to seal, and the original sealing structure of the battery pack is damaged. As a result, water vapor or liquid can enter the battery pack from the gap and come into contact with the electronic element, causing a short circuit.

### SUMMARY

The present disclosure provides a housing structure of a battery pack and a battery pack to provide waterproof protection for the electronic element inside the battery pack.

The present disclosure adopts the solutions described below.

The housing structure of a battery pack includes an upper housing, a lower housing, a support base, and a release member.

The upper housing is formed with a terminal connection port, a first open slot, and a second open slot. The second open slot is adjacent to the terminal connection port.

The lower housing is sealed with the upper housing in a circumferential direction of the lower housing, so that a chamber is formed between the upper housing and the lower housing.

The support base is formed with a guide groove in the interior of the support base. The support base is fixed to and sealed with the upper housing in the circumferential direction of the support base. The support base divides the chamber into an opened chamber and a sealed chamber.

The release member is slidably connected to the support base along the guide groove. The release member includes a pressing portion and an execution portion configured to move with the pressing portion. The pressing portion is configured to slide in the first open slot. The execution portion is configured to slide in the second open slot.

A battery pack is also provided. The battery pack includes an electronic element and the preceding housing structure of a battery pack. The electronic element is mounted in the sealed chamber. The electronic element includes a circuit board and cells. The circuit board is electrically connected to the cells. The circuit board is provided with LED lamps. The support base is formed with third open slots at a position of the support base corresponding to the LED lamps. The sealing plate is provided with light guides corresponding to the LED lamps. Each of the light guides is inserted into a corresponding one of the third open slots. An end of each of the light guides is exposed to the outside of the upper housing.

### BRIEF DESCRIPTION OF DRAWINGS

Drawings used in description of the embodiments of the present disclosure are briefly described below. Apparently, the drawings described below illustrate only part of the embodiments of the present disclosure, and those of ordinary skill in the art may obtain other drawings based on the content and drawings described below on the premise that no creative work is done.
FIG. 1 is a front view of a housing structure of a battery pack according to an embodiment of the present disclosure.
FIG. 2 is a section view of FIG. 1.
FIG. 3 is a view illustrating the structure of an upper housing according to an embodiment of the present disclosure.
FIG. 4 is a view illustrating the structure of a support base according to an embodiment of the present disclosure.
FIG. 5 is a side view of the support base according to an embodiment of the present disclosure.
FIG. 6 is assembly view one of the support base and a release member according to an embodiment of the present disclosure.
FIG. 7 is assembly view two of the support base and the release member according to an embodiment of the present disclosure.
FIG. 8 is a view illustrating the structure of a sealing plate according to an embodiment of the present disclosure.
FIG. 9 is assembly view one of the sealing plate and the support base according to an embodiment of the present disclosure.
FIG. 10 is assembly view two of the sealing plate and the support base according to an embodiment of the present disclosure.
FIG. 11 is a front view of a battery pack according to an embodiment of the present disclosure.

### Reference list

- 10: upper housing
- 11: terminal connection port
- 12: first open slot
- 13: second open slot
- 14: button
- 20: lower housing
- 21: opened chamber
- 22: sealed chamber
- 30: support base
- 31: guide groove
- 32: mounting column
- 33: stop boss
- 34: connection through-hole
- 35: third open slot
- 36: annular protrusion
- 37: fourth open slot
- 40: release member
- 41: pressing portion
- 42: execution portion
- 421: stop block
- 50: sealing plate
- 51: light guide
- 52: sealing rubber pad

### DETAILED DESCRIPTION

The present disclosure is further described below in detail in conjunction with drawings and embodiments. It is to be understood that the embodiments set forth below are intended to merely illustrate and not to limit the present disclosure. In addition, it is to be noted that for ease of description, only a part, not all, related to the present disclosure is illustrated in the drawings.

In the description of the present utility mode, unless otherwise expressly specified and limited, the term "connected to each other", "connected", or "fixed" is to be construed in a broad sense, for example, as permanently connected, detachably connected, or integrated; mechanically connected, or electrically connected; directly connected to each other or indirectly connected to each other via an intermediary; or internally connected or interactional between two components. For those of ordinary skill in the art, specific meanings of the preceding terms in the present disclosure may be understood based on specific situations.

In the present disclosure, unless otherwise expressly specified and limited, when a first feature is described as "on" or "below" a second feature, the first feature and the second feature may be in direct contact, or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

In the description of the embodiments, orientations or position relations indicated by terms such as "above", "below", "left" and "right" are based on the drawings. These orientations or position relations are intended only to facilitate the description and simplify an operation and not to indicate or imply that a device or element referred to must have such particular orientations or must be configured or operated in such particular orientations. Thus, these orientations or position relations are not to be construed as limiting the present disclosure. In addition, the terms "first" and "second" are used only to distinguish between descriptions and have no special meaning.

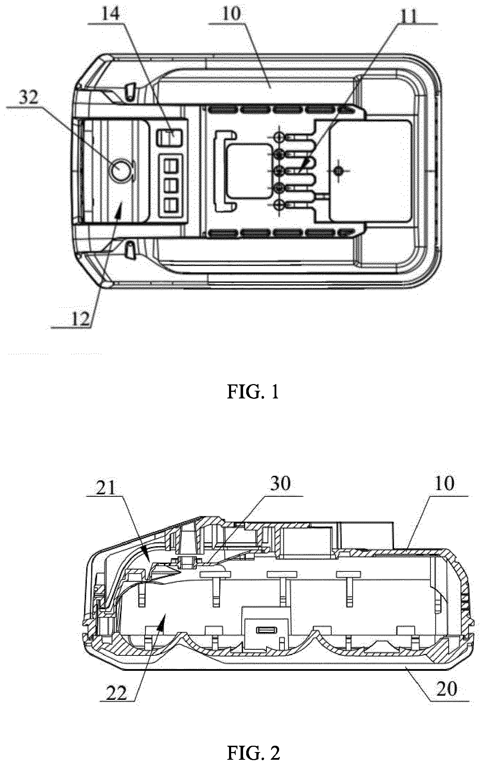

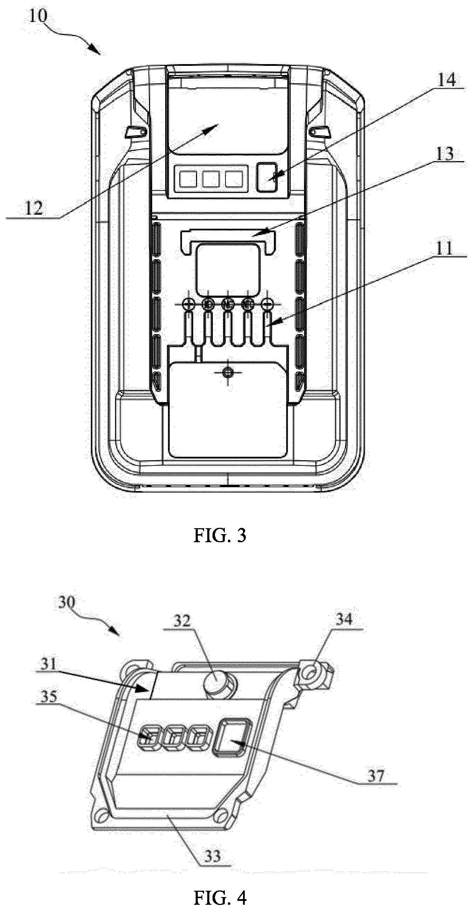

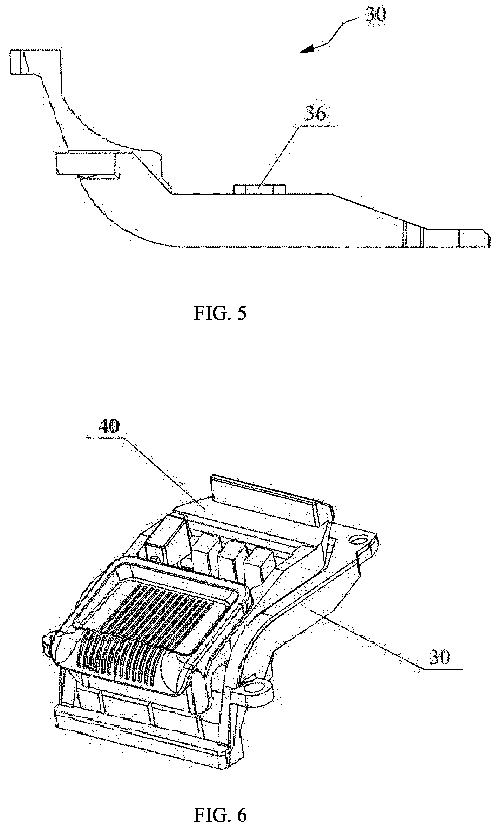

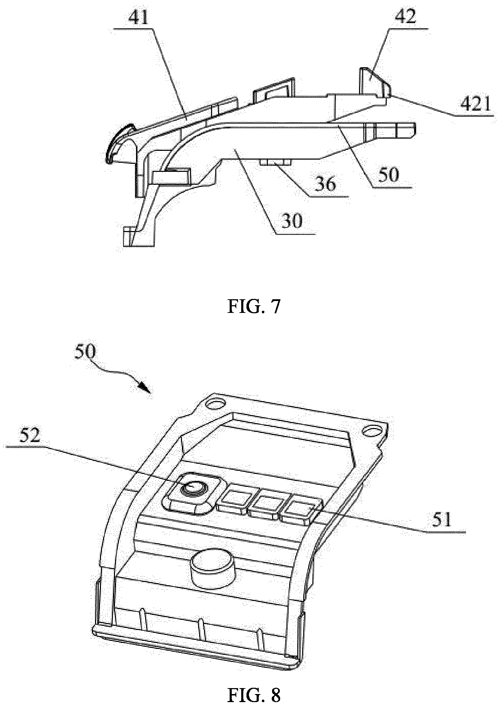

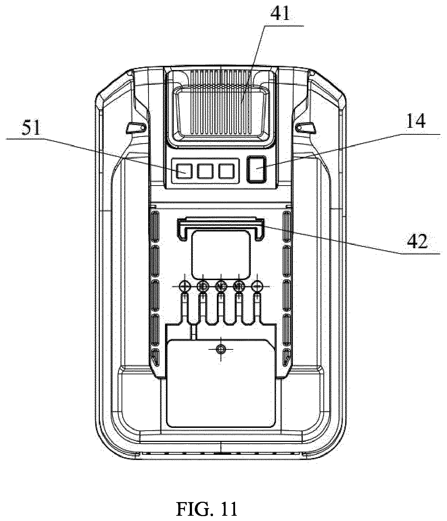

As shown in FIGS. 1 to 11, the present application provides a housing structure of a battery pack. The housing structure of a battery pack includes an upper housing 10, a lower housing 20, a support base 30, and a release member 40. The upper housing 10 is formed with a terminal connection port 11, a first open slot 12, and a second open slot 13. The second open slot 13 is adjacent to the terminal connection port 11. The lower housing 20 is sealed with the upper housing 10 in a circumferential direction of the lower housing 20, so that a chamber is formed between the upper housing 10 and the lower housing 20. The support base 30 is formed with a guide groove 31 in the interior of the support base 30. The support base 30 is fixed to and sealed with the upper housing 10 in the circumferential direction of the support base 30. The support base 30 divides the chamber into an opened chamber 21 and a sealed chamber 22. The release member 40 is slidably connected to the support base 30 along the guide groove 31. The release member 40 includes a pressing portion 41 and an execution portion 42 configured to move with the pressing portion 41. The pressing portion 41 is configured to slide in the first open slot 12. The execution portion 42 is configured to slide in the second open slot 13.

Specifically, the support base 30 is fixed to the upper housing 10 in a circumferential direction of the support base 30 and divides the chamber into the opened chamber 21 and the sealed chamber 22. Part of the upper housing 10 and the support base 30 are enclosed to form the opened chamber 21. The release member 40 is disposed in the opened chamber 21. The main body of the release member 40 is slidably connected to the support base 30 along the guide groove 31. Two ends of the release member 40 are the pressing portion 41 and the execution portion 42. The pressing portion 41 and the execution portion 42 are slidably connected to the first open slot 12 and the second open slot 13 respectively. The opened chamber 21 communicates with the environment outside the housing through the gap between the pressing portion 41 and the first open slot 12 or the gap between the execution portion 42 and the second open slot 13. Another part of the upper housing 10, the support base 30, and the lower housing 20 are enclosed to form the sealed chamber 22. The sealed chamber 22 is configured to mount the electronic element of the battery pack.

In use, the plug of a power tool is connected to a terminal in the battery pack through the terminal connection port 11. In this manner, the terminal connection port 11 formed in the sealed chamber 22 is blocked by the power tool. The sealed chamber 22 forms a relatively sealed space. The electronic element is disposed in the sealed chamber 22, so that the electronic element can be effectively isolated from external water vapor. In the release member 40, the pressing portion 41 is configured to drive the execution portion 42 to be connected to or disconnected from an electric workpiece. When the pressing portion 41 and the execution portion 42 move relative to the housing, the gap between the pressing portion 41, the execution portion 42 and the housing enables moisture to enter the housing. The support base 30 restricts the moisture in the opened chamber 21 to prevent the moisture from coming into contact with the electronic element located in the sealed chamber 22 and causing a short circuit.

Optionally, an elastic member is disposed between the release member 40 and one of the support base 30 or the upper housing 10 to enable the execution portion 42 to have a tendency to move along the second open slot 13 far away from the side of the housing structure where the support base 30 is located.

Specifically, the support base 30 is provided with a mounting column 32. The release member 40 is formed with a mounting groove. One end of the elastic member sleeves on the mounting column 32, and the other end of the elastic member is inserted into the mounting groove. With this disposition, the elastic member is stopped by the mounting column 32 and the mounting groove, so that the elastic member is deformed only in the axial direction of the elastic member after being stressed.

Optionally, the support base 30 is provided with a stop boss 33. A stop block 421 protrudes from the execution portion 42 of the release member 40. The stop block 421 can abut against the stop boss 33 to enable at least part of the execution portion 42 to be located in the second open slot 13.

Optionally, the housing structure of a battery pack also includes a sealing plate 50. The shape and outer dimensions of the sealing plate 50 are adapted to the shape and outer dimensions of the support base 30 to enable the sealing plate 50 to completely fit against and be fixed to the surface of the support base 30. The periphery of the sealing plate 50 is interposed between the support base 30 and the upper housing 10. The periphery of the sealing plate 50 can seal the support base 30 and the upper housing 10 in a circumferential direction of the sealing plate 50.

Optionally, multiple connection through-holes 34 are disposed on the peripheral sidewall of the support base 30. The support base 30 is fixed to the upper housing 10 by screws extending through the connection through-holes 34 and then being screwed to the upper housing 10. With this disposition, it is possible to prevent the screw from extending through the sealing plate 50 and damaging the sealing structure.

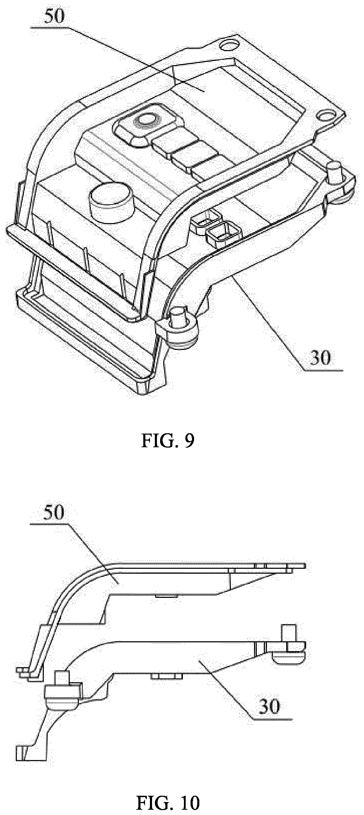

As shown in FIG. 9, a battery pack is also provided. The battery pack includes an electronic element and the preceding housing structure of a battery pack. The electronic element is mounted in the sealed chamber 22. The electronic element includes a circuit board and cells. The circuit board is electrically connected to the cells. The circuit board is provided with LED lamps. The support base 30 is formed with third open slots 35 at a position of the support base 30 corresponding to the LED lamps. The sealing plate 50 is provided with light guides 51 corresponding to the LED lamps. Each of the light guides 51 is inserted into a corresponding one of the third open slots 35. An end of each of the light guides 51 is exposed to the outside of the upper housing 10.

Specifically, the LED lamp can be configured to display the remaining electric quantity of the battery. To facilitate observation of a user, the support base 30 is formed with the third open slot 35. The sealing plate 50 is provided with the light guide 51. The light of the LED lamp irradiates the light guide 51. Thus, the light guide 51 can correspondingly display the display result of the LED lamp. At the same time, since the light guide 51 is disposed on the sealing plate 50, the opened chamber 21 and the sealed chamber 22 remain relatively independent.

Optionally, an annular protrusion 36 protrudes from the side of the support base 30 facing the circuit board along the peripheral side of the third open slot 35. The annular protrusion 36 sleeves on the outside of the LED lamp. With this disposition, the annular protrusion 36 can concentrate the light emitted by the LED lamp into the annular protrusion 36 and concentrate the light on the light guide 51, so that the light guide 51 can be more sensitive to the color change of the LED lamp and can reflect the image of the LED lamp more clearly.

Optionally, the circuit board is provided with a switch. The support base 30 is formed with a fourth open slot 37 corresponding to the switch. The sealing plate 50 is provided with a sealing rubber pad 52 corresponding to the fourth open slot 37 for covering the fourth open slot 37. The sealing rubber pad 52 can be deformed.

Specifically, the switch can control the LED lamp to turn on or off or control whether the battery in the battery pack is discharged. The fourth open slot 37 causes the switch to be exposed outside the support base 30. The sealing rubber pad 52 blocks the fourth open slot 37.

In this manner, the sealed chamber 22 and the opened chamber 21 are kept independent of each other, and at the same time, the user can make contact with the switch through the sealing rubber pad 52.

With this disposition, the sealing plate 50 is used in combination with the support base 30. The support base 30 provides mounting and support. Then the support base 30 is integrally sealed by the sealing plate 50. In this manner, sealing processing of the support base 30 for each open slot is reduced, the processing process is simplified, and the structure is simple. Moreover, the sealing reliability is improved.

Optionally, a button 14 is slidably connected to the upper housing 10. An end of the button 14 abuts against the switch through the sealing rubber pad 52. For ease of use, the upper housing 10 is provided with the button 14. The button 14 comes into contact with the switch along a preset guide hole.

The present application provides a housing structure of a battery pack and a battery pack. The housing structure of a battery pack includes an upper housing, a lower housing, a support base, and a release member. The upper housing is formed with a terminal connection port, a first open slot, and a second open slot. The second open slot is adjacent to the terminal connection port. The lower housing is sealed with the upper housing in a circumferential direction of the lower housing, so that the chamber is formed between the upper housing and the lower housing . The support base is formed with the guide groove in the interior of the support base. The support base is fixed to and sealed with the upper housing in the circumferential direction of the support base. The support base divides the chamber into an opened chamber and a sealed chamber. The release member is slidably connected to the support base along the guide groove. The release member includes a pressing portion and an execution portion configured to move with the pressing portion. The pressing portion is configured to slide in the first open slot. The execution portion is configured to slide in the second open slot.

In use, the plug of a power tool is connected to a terminal in the battery pack through the terminal connection port. In this manner, the terminal connection port formed in the sealed chamber is blocked by the power tool. Thus, the sealed chamber forms a relatively sealed space. The electronic element is disposed in the sealed chamber, so that the electronic element can be effectively isolated from external water vapor. In the release member, the pressing portion is configured to drive the execution portion to be connected to or disconnected from an electric workpiece. When the pressing portion and the execution portion move relative to the housing, the gap between the pressing portion and the execution portion and the housing enables moisture to enter the housing. The support base restricts the moisture in the opened chamber to prevent the moisture from coming into contact with the electronic element located in the sealed chamber and causing a short circuit.

## Claims

1. A housing structure of a battery pack, comprising:
an upper housing (10) formed with a terminal connection port (11), a first open slot (12), and a second open slot (13), wherein the second open slot (13) is adjacent to the terminal connection port (11);
a lower housing (20) sealed with the upper housing (10) in a circumferential direction of the lower housing (20), so that a chamber is formed between the upper housing (10) and the lower housing (20);
a support base (30) formed with a guide groove (31) in an interior of the support base (30), wherein the support base (30) is fixed to and sealed with the upper housing (10) in a circumferential direction of the support base (30), and the support base (30) divides the chamber into an opened chamber (21) and a sealed chamber (22); and
a release member (40) slidably connected to the support base (30) along the guide groove (31), wherein the release member (40) comprises a pressing portion (41) and an execution portion (42) configured to move with the pressing portion (41), the pressing portion (41) is configured to slide in the first open slot (12), and the execution portion (42) is configured to slide in the second open slot (13).

2. The housing structure of a battery pack according to claim 1, wherein an elastic member is disposed between the release member (40) and the support base (30) to enable the execution portion (42) to have a tendency to move along the second open slot (13) far away from the support base (30).

3. The housing structure of a battery pack according to claim 2, wherein one of the support base (30) or the release member (40) is provided with a mounting column (32), another of the support base (30) or the release member (40) is formed with a mounting groove, one end of the elastic member sleeves on the mounting column (32), and another end of the elastic member is inserted into the mounting groove.

4. The housing structure of a battery pack according to anyone of the claims 1 to 3, wherein the support base (30) is provided with a stop boss (33), and a stop block (421) protrudes from the execution portion (42) of the release member (40), and the stop block (421) is capable of abutting against the stop boss (33) to enable at least part of the execution portion (42) to be located in the second open slot (13).

5. The housing structure of a battery pack according to anyone of the claims 1 to 4, further comprising a sealing plate (50), wherein a shape and outer dimensions of the sealing plate (50) are adapted to a shape and outer dimensions of the support base (30) to enable the sealing plate (50) to completely fit against and be fixed to a surface of the support base (30), and a periphery of the sealing plate (50) is interposed between the support base (30) and the upper housing (10).

6. The housing structure of a battery pack according to claim 5, wherein a plurality of connection through-holes (34) are disposed on a peripheral sidewall of the support base (30), the support base (30) is fixed to the upper housing (10) by screws extending through the connection through-holes (34) and being screwed to the upper housing (10).

7. A battery pack, comprising an electronic element and the housing structure of a battery pack according to claim 5, wherein the electronic element is mounted in the sealed chamber (22), the electronic element comprises a circuit board and cells, the circuit board is electrically connected to the cells, the circuit board is provided with LED lamps, the support base (30) is formed with third open slots (35) at a position of the support base (30) corresponding to the LED lamps, the sealing plate (50) is provided with light guides (51) corresponding to the LED lamps, each of the light guides (51) is inserted into a corresponding one of the third open slots (35), and an end of each of the light guides (51) is exposed to an outside of the upper housing (10).

8. The battery pack according to claim 7, wherein an annular protrusion (36) protrudes from a side of the support base (30) facing the circuit board along a periphery of each of the third open slots (35), and the annular protrusion (36) sleeves outside a corresponding one of the LED lamps.

9. The battery pack according to claim 8, wherein the circuit board is provided with a switch, the support base (30) is formed with a fourth open slot (37) corresponding to the switch, the sealing plate (50) is provided with a sealing rubber pad (52) corresponding to the fourth open slot (37) for covering the fourth open slot (37), and the sealing rubber pad (52) is capable of being deformed.

10. The battery pack according to claim 9, wherein a button (14) is slidably connected to the upper housing (10), and an end of the button (14) abuts against the switch through the sealing rubber pad (52).
